# FASCICULE DE BREVET EUROPEEN

(11) **EP 1 170 179 B1**
(45) Date de publication et mention de la délivrance du brevet: **29.03.2006**
(21) Numéro de dépôt: 01401299.1
(22) Date de dépôt: 18.05.2001
(51) Int. Cl.: B60R 16/02

(54) **Système de commande d'organes de conduite pour un véhicule**
Steuerungssystem für Fahrzeugorganen
Control system of vehicle driving devices

(30) Priorité: 03.07.2000 FR 0008602
(43) Date de publication de la demande: 09.01.2002
(73) Titulaire: Peugeot Citroen Automobiles SA, 92200 Neuilly sur Seine (FR)
(72) Inventeur: Dhainaut, Jean-Marc, 75015 Paris (FR)
(74) Mandataire: Grynwald, Albert

(56) Documents cités:
- FR-A- 2 770 917
- US-A- 4 610 013
- US-A- 4 942 571

## Description

L'invention est relative à un système de commande d'organes de conduite pour un véhicule.

Le préambule de la revendication 1 est connu du document FR 2770 917 A.

Pour commander les organes d'un véhicule qui fonctionnent par alimentation électrique, tels que les feux de position, les feux de croisement ou de route ou les essuie-vitres, la plupart des véhicules actuels disposent d'un réseau électrique reliant chaque organe commandable à un élément de commande correspondant, ce dernier étant actionnable par le conducteur du véhicule. Un réseau électrique classique comprend donc de très nombreux fils électriques qui assurent la transmission des commandes à chaque organe ; la commande et l'alimentation en énergie de chaque organe sont obtenues par l'actionnement d'un interrupteur en série.

Cette technique courante présente l'inconvénient de nécessiter de nombreux fils pour la commande. Elle est donc onéreuse et d'entretien difficile, C'est pourquoi on commence à faire appel au multiplexage qui consiste à prévoir un nombre limité de bus transmettant des signaux électriques de commande, à courants faibles, vers les organes à commander. Les dispositifs de commande sont ainsi de type électronique et présentent donc un volume réduit et il est plus aisé de diagnostiquer les pannes. En outre, l'électronique permet d'introduire de façon simple des fonctions supplémentaires, par exemple l'allumage automatique des feux de position en fonction de l'intensité lumineuse ambiante ou la mise en fonctionnement automatique de l'essuie-vitre arrière lorsque la marche arrière est enclenchée et que l'essuie-vitre avant est en marche.

Toutefois, un réseau à multiplexage présente l'inconvénient que la panne d'une connexion ou d'un composant électronique entraîne l'impossibilité de commander plusieurs organes, ou même l'ensemble des organes.

La présente invention résulte de la constatation que de telles pannes peuvent être particulièrement dangereuses quand elles se produisent au cours de la conduite du véhicule.

Elle concerne donc un système de commande d'organes de conduite pour un véhicule comprenant un réseau à multiplexage transmettant des signaux de commande qui est caractérisé en ce qu'il comporte des moyens pour faire fonctionner au moins un organe selon un mode prédéterminé, dit de sécurité, lors d'une panne du réseau à multiplexage. Une panne du réseau correspond à une situation telle que le signal de commande correspondant ne parvient pas correctement à cet organe à commander, ou à une défaillance d'un composant du réseau destiné à acheminer un signal de commande vers cet organe.

Ainsi, lorsqu'une panne se produit au sein du réseau à multiplexage, l'impossibilité éventuelle d'actionner des organes nécessaires à la sécurité du véhicule, tels que les feux de position avant, les feux de position arrière, les feux de croisement ou un essuie-vitre est compensée par l'invention qui, automatiquement, activera, ou maintiendra activés, les organes nécessaires à la sécurité de la conduite du véhicule, ces organes fonctionnant ou se positionnant suivant un mode de sécurité.

Dans une réalisation préférée, le mode de sécurité comprend au moins l'un des modes suivants : l'allumage des feux de position, l'allumage des feux de croisement et l'activation d'un essuie-vitre.

Ainsi, le conducteur est assuré, lorsqu'une panne du réseau à multiplexage se produit en cours de conduite, de ne pas se retrouver dépourvu d'organes quasi indispensables pour la conduite ou la sécurité et qui ne peuvent plus être commandés en raison de la panne. De cette façon, le conducteur peut rejoindre, en toute sécurité, un lieu de stationnement.

Si la panne a permis de garder en mémoire, par exemple d'un microprocesseur, l'état de l'organe à commander qui précède cette panne, dans une réalisation, le mode de sécurité est, pour certains organes, celui qui précède la panne. Par exemple les essuie-vitres ne seront activés, dans cette réalisation, que s'ils l'étaient avant la panne.

Dans le cas contraire, c'est-à-dire la mémoire de l'état précédent est perdue (du fait de la panne), on impose un mode prédéterminé.

Les pannes peuvent être diverses : outre les défaillances de constituants du réseau (circuits ou alimentations), les pannes peuvent aussi provenir d'une rupture ou court-circuit de conducteurs de communications ou d'un blocage de logiciel.

La détection des pannes est, dans une réalisation, effectuée dans chacun des composants destinés à acheminer les signaux de commande vers les organes à commander. Ainsi quand un composant présente une panne qui a pour conséquence d'empêcher la transmission de la commande vers l'organe correspondant, un moyen est prévu pour que, depuis le composant tombé en panne, ou depuis un autre composant en amont ou à l'aval qui peut détecter la panne, on émette un signal destiné à faire fonctionner, ou positionner, l'organe selon le mode prédéterminé.

Dans un mode de réalisation préféré, pour détecter les pannes on prévoit que des composants à surveiller émettent, lorsqu'ils fonctionnent correctement, un signal caractéristique qui disparaît en cas de panne et cette disparition déclenche l'activation de moyens permettant de faire fonctionner, ou positionner, l'organe à commander selon le mode prédéterminé.

Pour fiabiliser la transmission des signaux de commande vers les organes à commander, il est préférable de doubler les conducteurs de signaux vers ces organes à commander.

Également pour fiabiliser la transmission des informations vers les organes à commander, dans un mode de réalisation on prévoit au moins une source d'appoint qui se substitue à la source principale en cas de panne.

Étant donné que certains des moyens de détection et/ou de commande permettant de positionner ou de faire fonctionner l'organe à commander dans un mode prédéterminé peuvent consommer une énergie non négligeable, il est préférable de faire fonctionner ces moyens uniquement lors du roulage du véhicule ou lors du fonctionnement du moteur de traction. Autrement dit, il est préférable de désactiver ces moyens si leur fonctionnement n'est pas nécessaire, par exemple quand le véhicule est à l'arrêt.

Pour détecter si le moteur fonctionne ou non, et, ainsi, déterminer s'il faut activer ou non les moyens de commande assurant la sécurité en cas de panne du réseau de communication, on utilise, par exemple, un signal fourni par un calculateur central ; en cas de défaillance de ce calculateur central, on peut également détecter si le moteur est en fonctionnement en utilisant une information provenant d'un organe sensible à la pression d'huile.

L'invention concerne donc un système de commande d'organes de conduite d'un véhicule selon l'objet de la revendication 1.

Dans une réalisation, l'organe à faire fonctionner selon le mode prédéterminé est choisi dans le groupe comprenant: les feux de position avant, les feux de position arrière, les feux de croisement, un essuie-vitre dont au moins l'essuie-vitre avant, des sources d'alimentation pour des composants du réseau.

Le mode prédéterminé consiste, par exemple, en au moins l'un des modes comprenant : l'allumage des feux de position, l'allumage des feux de croisement, l'activation d'un essuie-vitre dont au moins l'essuie-vitre avant, l'activation ou le maintien des sources d'alimentation.

Selon un mode de réalisation, le mode prédéterminé consiste en un maintien d'au moins certains organes dans leur mode ou position antérieur à la panne.

Dans une réalisation, à au moins un composant du réseau est associé un moyen de détection de panne de ce composant et d'émission de signaux de commande selon le mode ou la position prédéterminé en cas de détection de panne.

Dans ce cas, le composant émet, par exemple, un signal caractéristique lorsqu'il fonctionne correctement et le moyen de détection de panne et d'émission de signaux de commande émet de tels signaux de commande seulement lors de la disparition de ce signal caractéristique.

Le réseau comporte, par exemple, un bloc calculateur central transmettant par multiplexage les signaux de commande aux organes à commander, et un bloc multiplexeur pour transmettre des signaux de commande vers une partie des organes à commander, par exemple ceux qui sont accessibles seulement par l'intermédiaire du compartiment moteur du véhicule.

Dans une réalisation, au bloc calculateur central est associé un moyen de détection de la disparition du signal caractéristique du fonctionnement correct de ce bloc calculateur central et d'émission de signaux de commande vers certains organes lors de cette disparition.

En cas de fonctionnement correct, dans une réalisation, le bloc calculateur central émet un signal caractéristique vers le bloc multiplexeur, ce bloc multiplexeur comportant les moyens pour émettre des signaux de commande pour placer d'autres organes en mode ou position prédéterminé lorsque ce signal caractéristique n'est plus reçu par le bloc multiplexeur.

Le bloc multiplexeur comporte, en outre, dans une réalisation, un moyen de secours pour détecter une panne de ce bloc et émettre des signaux de commande en mode ou position prédéterminé vers les organes à commander par l'intermédiaire de ce bloc multiplexeur dans le cas d'une telle détection de panne.

Les moyens pour faire fonctionner ou positionner un organe selon un mode ou une position prédéterminé sont, de préférence, activés seulement lorsque le moteur du véhicule est susceptible de tourner.

Par exemple, les moyens pour faire fonctionner ou positionner au moins un organe selon un mode ou une position prédéterminé ne sont activés que lorsque l'alimentation d'après-contact est activée.

On peut prévoir un moyen de détection de l'état de fonctionnement du moteur, par exemple un détecteur de la pression d'huile de ce moteur.

Dans une réalisation, le bloc calculateur central et le bloc multiplexeur du compartiment moteur comprennent :
un moyen pour, quand le moteur est à l'arrêt, positionner le bloc calculateur central en mode de fonctionnement économique,
un moyen pour inhiber, depuis le bloc calculateur central, le moyen de secours du bloc multiplexeur du compartiment moteur avant que le bloc calculateur central fonctionne en mode économique,
le bloc calculateur central réactivant le moyen de secours du bloc multiplexeur lorsque le moteur est en fonctionnement.

Certains des conducteurs de signaux du réseau forment, de préférence, une paire dans laquelle les mêmes informations sont transmises par chacun des conducteurs de cette paire.

Dans un mode de réalisation, le bloc calculateur central reçoit son énergie, outre de l'alimentation permanente, de l'alimentation d'accessoire et de l'alimentation d'après-contact.

Le bloc multiplexeur peut être alimenté en énergie électrique, outre par l'alimentation générée par le bloc calculateur central, par l'alimentation d'après-contact.

D'autres caractéristiques et avantages de l'invention apparaîtront avec la description de certains de ses modes de réalisation, celle-ci étant effectuée en se référant aux dessins ci-annexés sur lesquels :
la figure 1 est une vue d'ensemble d'un véhicule comprenant un réseau à multiplexage conforme à l'invention et divers composants de ce réseau,
les figures 1a, 1b et 1c sont des vues schématiques d'ensemble du réseau multiplexé conforme à l'invention et comprenant divers composants de ce réseau,
la figure 2 est un schéma d'un composant du réseau conforme à l'invention, et
la figure 3 est un schéma d'un autre composant du réseau conforme à l'invention.

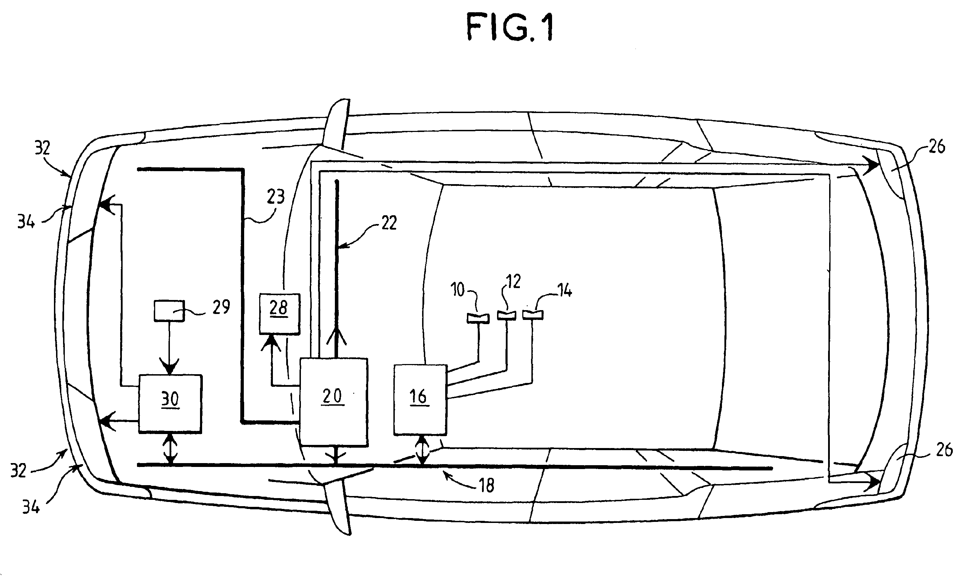

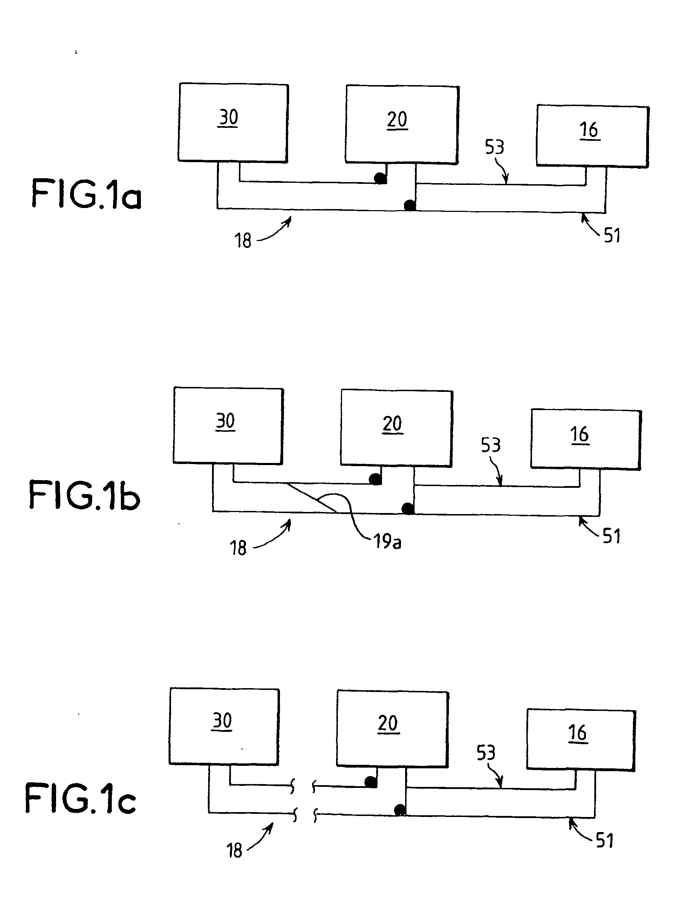

On a représenté sur la figure 1 les diverses parties d'un réseau transmettant les ordres du conducteur d'un véhicule automobile vers des organes alimentés en énergie électrique.

Ainsi, des éléments de commande 10, 12 et 14, actionnables par le conducteur, déclenchent l'émission de signaux d'activation destinés aux organes électriques à commander, tels que les feux de position 32 et 26, de croisement 34 ou de route et les essuie-vitres, dont l'essuie-vitre avant 28.

Ces signaux de commande sont reçus par un premier multiplexeur 16 qui les transmet sur un bus 18 auquel est connecté un bloc calculateur-multiplexeur 20 qui est relié à d'autres bus 22 et 23. Ce bloc calculateur 20 est un calculateur central qui assure la gestion d'un bloc multiplexeur du compartiment moteur, la communication entre le bus 18 et les bus 22 et 23, la gestion des commandes de certains constituants du réseau, la distribution et la protection d'alimentations électriques, en particulier pour les organes de l'habitacle, la gestion du mode de veille et du mode de réveil du véhicule, ainsi que la commande directe d'organes, tels que les feux de position arrière 26 et l'essuie-vitre avant 28 et arrière, qui sont accessibles sans passer par l'intermédiaire du bloc-moteur.

On prévoit un bloc multiplexeur 30 pour la transmission des ordres du bloc 20 au compartiment moteur du véhicule et pour la transmission des commandes vers les organes à alimentation électrique de la partie avant, tels que les feux de position avant 32, les feux de croisement 34 et les feux de route. Ce bloc 30 assure aussi la distribution et la protection d'alimentations électriques des organes du compartiment moteur. Le bloc 30 reçoit du capteur 29 des signaux nécessaires à la gestion du compartiment moteur. Ces signaux sont transmis, via le bus 18, au bloc calculateur central 20.

Dans l'exemple, le bus 18 et le bus 22 sont réalisés selon la technologie (protocole) normalisée VAN (« Vehicle Area Network ») et le bus 23 est réalisé selon la technologie (protocole) normalisée CAN (« Control Area Network »).

On constate que les divers éléments constitutifs du réseau de commande sont interdépendants et qu'ainsi une panne de l'un de ces éléments peut entraîner l'impossibilité pour le conducteur de commander tout ou partie des organes du véhicule. Par exemple, une panne du bloc calculateur central 20 rend inactionnables les feux de position, les feux de croisement ou l'essuie-vitre. De même, une panne du bloc multiplexeur 30 du compartiment moteur peut empêcher l'activation des feux de position avant et des feux de croisement. De même, un court-circuit ou un circuit ouvert sur les deux conducteurs du bus 18 entraîne l'impossibilité de commander l'actionnement de la plupart des organes du véhicule.

C'est pourquoi, selon la présente invention, on prévoit des moyens pour détecter une panne du réseau et des moyens, déclenchés par une détection de panne, pour actionner ou positionner au moins certains des organes électriques dans un mode (ou position) de sécurité. Dans la réalisation représentée sur la figure 1, ces moyens se trouvent dans les blocs 20 et 30.

Les organes à actionner ou positionner dans un mode ou position de sécurité comprennent : les feux de position avant 32 et arrière 26, les feux de croisement 34, des essuie-vitres, dont au moins l'essuie-vitre avant 28; ces organes comprennent aussi des alimentations en énergie électrique.

Dans l'exemple, les alimentations prévues, bien entendu alimentées par la batterie principale (non montrée) sont: une alimentation 100 (ACC) d'accessoires, tels que les lève-vitres, l'autoradio, etc. qui est alimentée dans une première position de la clé de contact ; une alimentation 102 dite après-contact (APC), qui intervient dans une seconde position de la clé de contact et qui est destinée à l'alimentation des organes essentiels ; une alimentation spécifique 104 du bloc multiplexeur du compartiment moteur 30 dont le fonctionnement est déclenché par le bloc calculateur central 20 ; enfin, une alimentation spécifique 106 est prévue pour le bloc calculateur central.

Pour expliquer le fonctionnement du système, on considérera les pannes en partant du multiplexeur 16 vers les organes à commander en passant par les conducteurs, composants et alimentations intermédiaires.

Le premier type de panne à considérer est une défaillance du multiplexeur 16. Dans ce cas, la défaillance est détectée (d'une façon qui sera décrite plus loin) par le calculateur central 20 et celui-ci déclenche l'allumage des feux de position avant et arrière, ainsi que des feux de croisement et maintient les essuie-vitres dans leur état de fonctionnement précédent. Les feux ne sont pas maintenus dans leur état précédent mais sont, de préférence, systématiquement allumés. Ainsi, si la panne intervient à la tombée de la nuit, avant que le conducteur ait commandé l'allumage des feux de son véhicule, il bénéficiera, la nuit tombée, de l'éclairage nécessaire.

Le deuxième type d'incident pouvant intervenir est une coupure des 2 fils de communication entre le multiplexeur 16 et le bloc calculateur 20. Ce type d'incident est géré comme le précédent, c'est-à-dire par une commande du calculateur 20 qui déclenche l'allumage des feux de position avant 32 et arrière 26, des feux de croisement 34 et le mai-ntien des essuie-vitres dont au moins l'essuie-vitre avant 28, dans leur état de fonctionnement précédent.

Le troisième type de panne à considérer est une défaillance du microcontrôleur du calculateur central 20. Dans ce cas, la panne est détectée par le bloc multiplexeur 30 du compartiment moteur et ce bloc 30 commande l'allumage des feux de position avant et des feux de croisement. Le bloc calculateur central 20 comporte aussi un dispositif de secours, qui sera décrit ci-après, dont le rôle est de maintenir l'alimentation du bus 22 ainsi que l'alimentation 104 nécessaire transmise par le bus 18, et de commander aussi l'allumage des feux de position arrière 26. En outre, ce dispositif de secours met les essuie-vitres en fonctionnement, dont l'essuie-vitre avant 28. En effet, le microcontrôleur du bloc calculateur central 20 étant défaillant, il ne peut pas garder la mémoire du mode de fonctionnement antérieur des essuie-vitres. Par ailleurs, le dispositif de secours est déclenché seulement lorsque l'alimentation après-contact 102 est en service car, dans le cas contraire, le véhicule est à l'arrêt, et il n'est pas indispensable de mettre en fonctionnement les feux et les essuie-vitres.

Le quatrième type de défaillance à considérer est la défaillance totale du bloc calculateur 20, y compris le dispositif de secours qui lui est affecté. Dans ce cas, la panne est détectée par le bloc multiplexeur du compartiment moteur 30 qui déclenche l'allumage des feux de position avant 32 et des feux de croisement 34. Comme dans le cas précédent, et pour la même raison, ce déclenchement n'intervient que si l'alimentation après-contact 102 est en service.

Le cinquième type d'incident à considérer est celui d'une panne de l'alimentation spécifique affectée au bloc calculateur central 20. Pour remédier à cette défaillance, on prévoit que ce bloc calculateur 20 soit alimenté également par l'alimentation d'après-contact 102 et l'alimentation d'accessoires 100.

Le sixième incident qu'on considère est un court-circuit entre les deux fils du bus 18. Dans ce cas, la panne est détectable par le bloc calculateur central 20 et le bloc multiplexeur du compartiment moteur 30. Le bloc calculateur central déclenche l'allumage des feux de position arrière 26 et maintient le fonctionnement des essuie-vitres, dont au moins l'essuie-vitre avant 28, dans son état de fonctionnement (marche ou arrêt) précédent, tandis que le bloc multiplexeur 30 du compartiment moteur déclenche l'allumage des feux de position avant 32 et des feux de croisement 34.

Le septième incident possible est une coupure des deux fils de communication entre le bloc calculateur central 20 et le bloc multiplexeur 30 du compartiment moteur. Dans ce cas, l'incident est détecté par les blocs 20 et 30 qui déclenchent, respectivement, les feux de position arrière 26 et les feux de position avant 32 et les feux de croisement 34.

Il convient de noter la différence entre un court-circuit et une coupure des deux fils de communication 51 et 53 du bus 18 entre le bloc calculateur central 20 et le bloc multiplexeur du compartiment moteur 30.

En se référant à la figure 1a, on observe que le bus 18 relie le bloc calculateur central 20 au multiplexeur de commande 16 et au bloc multiplexeur du compartiment moteur 30 au moyen de deux fils 51 et 53. De ce fait, comme montré sur la figure 1b, un éventuel court-circuit 19a entre les deux fils conducteurs 51 et 53 du bus 18 entraînerait une panne générale du bus et, en conséquence, empêcherait toute communication entre les composants du réseau multiplexé.

Dans le cas d'une coupure des deux fils de communication du bus 18 entre le bloc calculateur central 20 et le bloc multiplexeur du compartiment moteur 30, comme montré sur la figure 1c, le bloc calculateur central continue à communiquer avec le multiplexeur 16. Cette différence entre court-circuit et coupure entraîne des actions distinctes puisque, dans un cas (court-circuit), l'ensemble du réseau multiplexé est en panne alors que dans l'autre cas (coupure) seul le bloc multiplexeur du compartiment moteur 30 se trouve isolé.

Un huitième type d'incident à considérer est une défaillance du bloc multiplexeur du compartiment moteur 30. Cette défaillance est détectée par un dispositif de secours associé au calculateur 30 qui déclenche l'allumage des feux de position avant 32 et des feux de croisement 34, les autres organes n'étant pas concernés par ce type de panne.

Pour pallier à un neuvième type d'incident qui est constitué par une défaillance de l'alimentation spécifique du bloc multiplexeur 30 fournie par le bloc calculateur central 20, on prévoit d'alimenter, en outre, le bloc 30 par l'alimentation d'après-contact 102.

Enfin, de façon générale, pour pallier à une coupure ou à un court-circuit d'un fil de communication en un point quelconque du bus 18, on prévoit de doubler les conducteurs, chacun d'eux transmettant les mêmes communications. Ainsi en cas de rupture d'un seul conducteur, le second conducteur transmet les communications et l'incident n'a pas de conséquence. Toutefois, dans une réalisation, le second conducteur ne transmet pas l'information du premier conducteur à l'identique mais sous la forme de signaux numériques complémentaires des signaux numériques du premier conducteur.

On constate ainsi que l'invention consiste principalement à actionner ou positionner les organes principaux contribuant à la sécurité de la conduite dans un mode ou une position de sécurité qui permet au conducteur de se rendre en sécurité vers un lieu de stationnement.

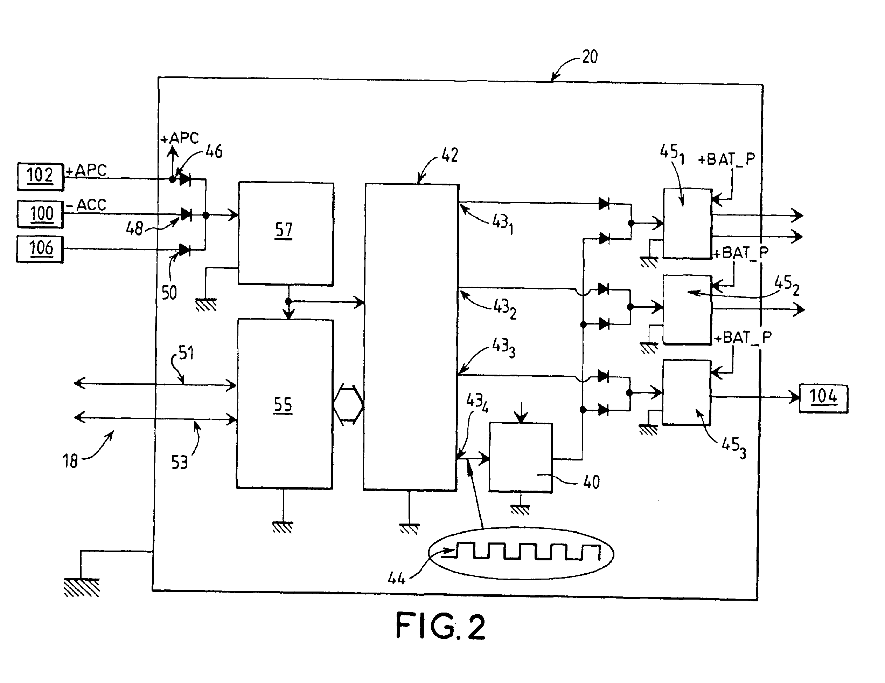

On va maintenant décrire, en relation avec la figure 2, les moyens de détection de panne et les moyens de secours associés au bloc calculateur central 20.

Ce bloc calculateur central comporte un microcontrôleur 42 qui assure la commande des diverses fonctions du véhicule, ainsi que la gestion des protocoles de multiplexage.

Ce microcontrôleur 42 comporte trois sorties, 43₁, 43₂, 43₃ dont la première (43₁) est destinée à commander les feux de position arrière par l'intermédiaire d'un étage de sortie 45₁. La seconde sortie (43₂) délivre un signal de commande pour l'essuie-vitre avant par l'intermédiaire d'un autre étage de sortie 45₂. Enfin, la troisième sortie (43₃) est destinée à commander une alimentation du bloc multiplexeur du compartiment moteur 30 par l'intermédiaire d'un troisième étage de sortie 453.

Le microcontrôleur 42 est programmé pour détecter si les signaux sont reçus correctement et, s'il en est ainsi, délivrer sur une sortie 43₄ un signal périodique 44. La sortie 43₄ est reliée à l'entrée d'un circuit 40 dit de « chien-de-garde » qui, quand le microcontrôleur fonctionne correctement - c'est-à-dire en présence du signal 44 - n'émet aucun signal. Quand le microcontrôleur 42 est en panne, il ne peut pas émettre le signal 44 et le circuit 40 de chien-de-garde détecte cette absence de signal 44 et commande l'allumage des feux de position arrière par une connexion à l'étage de sortie 45₁, le fonctionnement de l'essuie-vitre avant par une connexion à l'étage 45₂, ainsi que de l'activation de l'alimentation du bloc 30 par une connexion à l'étage 45₃.

Le circuit de chien-de-garde 40 reçoit son énergie électrique de l'alimentation d'après-contact. Ainsi il est en service seulement lorsque le moteur est susceptible de fonctionner.

La communication du microcontrôleur 42 avec les bus, par exemple les deux fils conducteurs 51 et 53 du bus 18, s'effectue par l'intermédiaire d'un émetteur/récepteur de ligne 55.

Le microcontrôleur 42 ainsi que l'émetteur/récepteur de ligne 55 sont alimentés par un bloc régulateur de protection 57 qui reçoit son énergie électrique, d'une part, par une première entrée 46 reliée à l'alimentation d'après-contact 102, d'autre part, par une seconde entrée 48 reliée à l'alimentation d'accessoires 100, et d'autre part enfin, d'une troisième entrée 50 reliée à l'alimentation permanente 106 provenant directement de la batterie.

Les étages de sortie 45₁, 45₂, 45₃ commandent l'alimentation de l'énergie des feux de position arrière, de l'essuie-vitre avant et de l'alimentation du bloc 30 grâce à une connexion à la batterie principale du véhicule automobile.

Les pannes du microcontrôleur 42 peuvent être dues soit à une défaillance de ses circuits, soit à une défaillance de son alimentation, soit, enfin, à une défaillance du (ou des) logiciel (s) implanté (s) dans ce microcontrôleur.

Si le microcontrôleur 42 fonctionne correctement, le circuit de chien-de-garde 40 est inhibé mais le microcontrôleur 42 peut cependant transmettre des instructions de forçage des feux de position avant et arrière, des feux de croisements, de l'essuie-vitre avant et de l'alimentation du bloc 30. Les instructions vers le bloc 30 (feux de position avant et feux de croisement) sont transmises par l'intermédiaire de l'émetteur/récepteur de ligne 55.

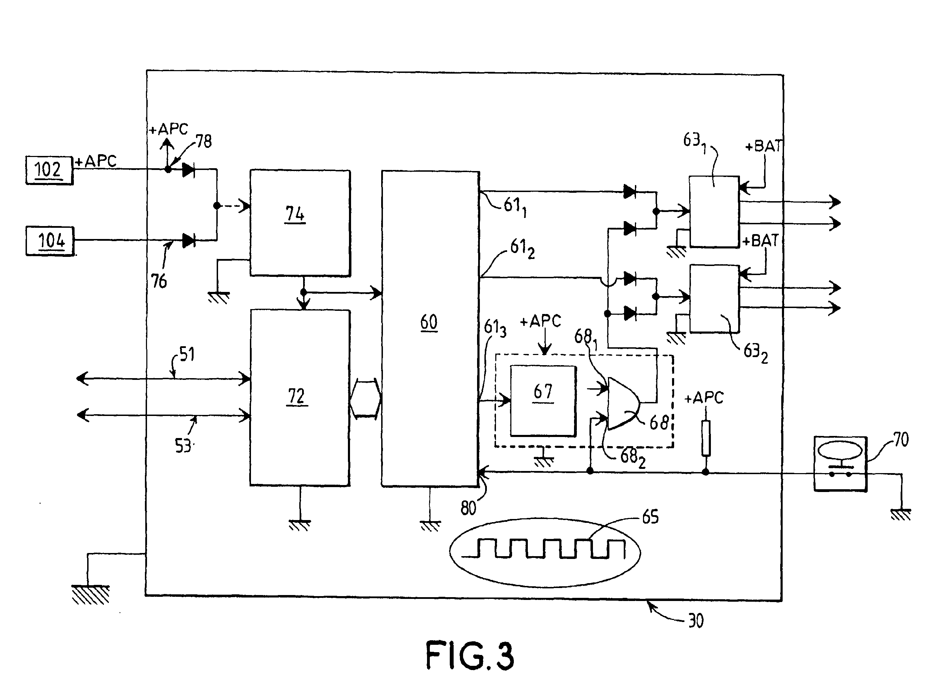

On va maintenant décrire, en relation avec la figure 3, le bloc multiplexeur du compartiment moteur 30 comportant des moyens de détection de panne et des moyens de secours.

Le multiplexeur du compartiment moteur 30 comporte un circuit 60, par exemple sous la forme d'un microcontrôleur ou d'un circuit logique, dont le rôle est d'assurer la gestion du protocole des communications multiplexées et, selon l'invention, de commander des fonctions de sécurité. Ce circuit 60 présente une première sortie 61₁ destinée à transmettre des signaux de commande des feux de position avant par l'intermédiaire d'un premier étage de sortie 63₁. Une seconde sortie 61₂ du circuit 60 délivre des signaux de commande des feux de croisement par l'intermédiaire d'un second étage de sortie 632.

Par ailleurs, le circuit 60 comporte une troisième sortie 613 qui, en cas de fonctionnement correct de ce circuit 60, délivre des signaux périodiques 65 à l'entrée d'un circuit de chien-de-garde 67. La sortie du circuit 67 est connectée à la première entrée 68₁ d'une porte ET 68 dont la seconde entrée 68₂ est connectée à un détecteur 70 d'état de fonctionnement du moteur. La sortie de la porte ET 68 est reliée aux entrées des étages de sorties 63₁ et 63₂.

Le signal 65 délivré sur la sortie 61₃ du circuit 60 est engendré par le bloc calculateur central 20 et est transmis au bloc 30 par l'intermédiaire du bus 18. De cette manière, le signal 65 représente le fonctionnement correct du bloc calculateur 20 et du circuit 60 lui-même ainsi qu'une communication correcte entre le bloc calculateur 20 et le bloc multiplexeur 30.

La communication entre le circuit 60 et le bus 18 à deux conducteurs 51 et 53 est assurée par un émetteur/récepteur de ligne 72.

L'émetteur/récepteur de ligne 72 et le circuit 60 reçoivent leurs énergies électriques d'un bloc d'alimentation 74 analogue au bloc 57 du bloc calculateur 20.

Ce bloc d'alimentation 74 est lui-même alimenté par une première entrée 76 recevant l'alimentation 104 fournie par le calculateur 20 et par une seconde entrée 78 recevant l'alimentation d'après-contact 102.

Il est à noter que, contrairement au bloc d'alimentation 57 du bloc calculateur central 20, on ne prévoit pas d'alimenter le bloc 74 du bloc multiplexeur 30 du compartiment moteur par l'alimentation d'accessoires. En effet, les commandes à transmettre par le multiplexeur 30 concernent des fonctions qui doivent être maintenues quand le moteur est susceptible de tourner et qui ne sont pas indispensables dans le cas contraire.

Le programme de sécurité contenu dans le circuit 60 permet d'émettre sous la commande de signaux reçus du bloc calculateur central 20, ou en cas de détection de défaut de communication avec l'émetteur/récepteur de ligne 72 ou avec le bus 18, des signaux de commande, par les sorties 61₁ et 61₂, pour les feux de position avant et les feux de croisement, ces feux étant allumés pour assurer la sécurité de la conduite malgré l'absence de communication avec les éléments 10, 12 et 14. Dans cette situation, le circuit 60 fonctionne correctement et est également alimenté correctement par les entrées 76 ou 78.

Si le circuit 60 tombe en panne, du fait d'une défaillance d'un de ses composants ou d'une défaillance de son logiciel ou encore d'une défaillance de son alimentation, le signal de sortie 61₃ disparaît ce qui active le circuit de chien-de-garde 67.

En outre, afin de réaliser des économies d'énergie, le programme de sécurité du circuit 60 est activé ou désactivé à partir du bloc calculateur central 20. En effet, un mode de fonctionnement économique s'établit quand la clef de contact est dans une position autre que la position arrêt et quand le moteur est à l'arrêt. Dans ce mode de fonctionnement économique, le bloc calculateur central 20 est mis en veille provoquant, d'une part, l'arrêt de la communication sur le bus 18, entraînant l'arrêt de la communication entre le bloc calculateur central 20 et le bloc multiplexeur 30 du compartiment moteur, et, d'autre part, la coupure de l'alimentation 104. Pour éviter, dans ce cas, l'activation du mode de secours du circuit 60 après détection de l'absence de communication, avant de passer en mode de veille le bloc calculateur central 20 émet une commande inhibant le mode de secours du circuit 60. De façon similaire, lors du démarrage, lorsque le bloc calculateur central 20 passe en mode actif, il émet un signal réactivant le mode de secours du circuit 60.

Le rôle de la porte ET 68 est, en cas d'activation du circuit 67, c'est-à-dire de disparition du signal 65, de n'activer les positions, ou modes, de sécurité des feux de position avant et de croisement que si le moteur du véhicule tourne. Ainsi, le détecteur 70 fournit un signal représentant la position d'un contact de pression d'huile moteur. Quand le moteur ne tourne pas, le signal sur l'entrée 68₂ de la porte 68 est à « 0 », et le signal de sortie du circuit 67 ne peut être acheminé aux étages de sorties 63₁ et 63₂.

Il est aussi à noter que le détecteur 70 fournit une information sur le fonctionnement ou non du moteur à une entrée 80 du circuit 60. Le signal fourni par le détecteur 70 a pour but de permettre au bloc multiplexeur 30 de renseigner, via le bus 18, le contrôleur 42 sur l'état de fonctionnement du moteur. Ce signal permet l'émission de signaux sur les sorties 61₁ et 61₂ - pour le fonctionnement en sécurité des feux de position avant et les feux de croisement - ce fonctionnement en sécurité n'intervenant que si le moteur tourne.

## Revendications

1. Système de commande d'organes de conduite d'un véhicule, ce système comprenant un réseau transmettant par multiplexage des signaux de commande à ces organes, ces signaux étant engendrés par des dispositifs (10, 12, 14) actionnables par le conducteur, et comportant des moyens pour faire fonctionner ou positionner au moins un organe de conduite selon un mode ou une position prédéterminé, de sécurité, lors d'une panne telle qu'un signal de commande correspondant ne parvient pas correctement à cet organe de conduite à commander, **caractérisé en ce qu'**il le système est tel que le conducteur est assuré, lorsqu'une panne du réseau multiplexé se produit en cours de conduite, de ne pas se retrouver dépourvu d'organes quasi indispensables pour la conduite ou la sécurité et qui ne peuvent plus être commandés en raison de la panne.

2. Système selon la revendication 1 **caractérisé en ce que** l'organe à faire fonctionner selon le mode prédéterminé est choisi dans le groupe comprenant : les feux de position avant (32), les feux de position arrière (26), les feux de croisement (34), un essuie-vitre dont au moins l'essuie-vitre avant (28), des sources d'alimentation (100, 102, 104) pour des composants du réseau.

3. Système selon la revendication 2 **caractérisé en ce que** le mode prédéterminé consiste en au moins l'un des modes comprenant : l'allumage des feux de position (32, 26), l'allumage des feux de croisement (34), l'activation d'un essuie-vitre dont au moins l'essuie-vitre avant (28), l'activation ou le maintien des sources d'alimentation (100, 102, 104).

4. Système selon la revendication 1, 2 ou 3 **caractérisé en ce que** le mode prédéterminé consiste en un maintien d'au moins un organe dans un mode ou une position antérieur à la panne.

5. Système selon l'une quelconque des revendications précédentes **caractérisé en ce qu'**à au moins un composant du réseau est associé un moyen de détection de panne de ce composant (40, 67) et d'émission de signaux de commande selon le mode ou la position prédéterminé en cas de détection de panne.

6. Système selon la revendication 5 **caractérisé en ce que** le composant émet un signal caractéristique (44 ; 65), lorsqu'il fonctionne correctement et **en ce que** le moyen de détection de panne et d'émission de signaux de commande, (40, 67), émet de tels signaux de commande seulement lors de la disparition de ce signal caractéristique (44, 65).

7. Système selon l'une quelconque des revendications précédentes **caractérisé en ce que** le réseau comporte un bloc calculateur central (20) transmettant par multiplexage les signaux de commande aux organes à commander, et un bloc multiplexeur (30) pour transmettre des signaux de commande vers une partie des organes à commander, par exemple ceux qui sont accessibles seulement par l'intermédiaire du compartiment moteur du véhicule.

8. Système selon les revendications 6 et 7
**caractérisé en ce qu'**au bloc calculateur central (20) est associé un moyen de détection (40) de la disparition du signal caractéristique du fonctionnement correct de ce bloc calculateur central et d'émission de signaux de commande vers certains organes lors de cette disparition.

9. Système selon la revendication 8 **caractérisé en ce qu'**en cas de fonctionnement correct le bloc calculateur central émet un signal caractéristique vers le bloc multiplexeur (30), ce bloc multiplexeur comportant le moyen pour émettre des signaux de commande pour placer d'autres organes en mode ou position prédéterminé lorsque ce signal caractéristique n'est plus reçu par le bloc multiplexeur.

10. Système selon la revendication 9 **caractérisé en ce que** le bloc multiplexeur (30) comporte, en outre, un moyen de secours (67) pour détecter une panne de ce bloc et émettre des signaux de commande en mode ou position prédéterminé vers les organes à commander par l'intermédiaire de ce bloc multiplexeur dans le cas d'une telle détection de panne.

11. Système selon l'une quelconque des revendications précédentes **caractérisé en que** les moyens pour faire fonctionner ou positionner un organe selon un mode ou une position prédéterminé sont activés seulement lorsque le moteur du véhicule est susceptible de tourner.

12. Système selon la revendication 11 **caractérisé en ce que** les moyens pour faire fonctionner ou positionner au moins un organe selon un mode ou une position prédéterminé ne sont activés que lorsque l'alimentation d'après-contact (102) est activée.

13. Système selon la revendication 11 ou 12 **caractérisé en ce qu'**il comporte un moyen de détection de l'état de fonctionnement du moteur, par exemple un détecteur de la pression d'huile de ce moteur (70).

14. Système selon la revendication 10 **caractérisé en ce que** le bloc calculateur central (20) et le bloc multiplexeur 30 du compartiment moteur comprennent :
un moyen pour, quand le moteur est à l'arrêt, positionner le bloc calculateur central (20) en mode de fonctionnement économique,
un moyen pour inhiber, depuis le bloc calculateur central (20), le moyen de secours du bloc multiplexeur (30) du compartiment moteur avant que le bloc calculateur central fonctionne en mode économique,
le bloc calculateur central (20) réactivant le moyen de secours du bloc multiplexeur lorsque le moteur est en fonctionnement.

15. Système selon l'une quelconque des revendications précédentes **caractérisé en ce que** certains des conducteurs de signaux du réseau forment une paire dans laquelle les mêmes informations sont transmises par chacun des conducteurs de cette paire.

16. Système selon l'une quelconque des revendications 7 à 10 **caractérisé en ce que** le bloc calculateur central (20) reçoit son énergie, outre de l'alimentation permanente, de l'alimentation d'accessoire (100) et de l'alimentation d'après-contact (102).

17. Système selon l'une quelconque des revendications 7 à 10 **caractérisé en ce que** le bloc multiplexeur est alimenté en énergie électrique, outre par l'alimentation (104) générée par le bloc calculateur central (20), par l'alimentation d'après-contact (102).

## Patentansprüche

1. System zur Steuerung von Fahrorganen eines Fahrzeugs, wobei das System ein Netz umfasst, das Steuersignale durch Multiplex an diese Organe übermittelt, wobei diese Signale durch Vorrichtungen (10, 12, 14) erzeugt werden, die von dem Fahrer betätigt werden können und Mittel aufweist zum Betätigen oder Positionieren von mindestens einem Fahrorgan nach einer vorbestimmten Art oder zu einer vorbestimmten Position, zur Sicherheit, bei solch einer Panne, daß ein entsprechendes Steuersignal nicht korrekt an dem zu steuernden Fahrorgan ankommt, **dadurch gekennzeichnet,**
**dass** das System so aufgebaut ist, dass der Fahrer abgesichert ist, wenn eine Panne des Multiplexnetzes beim Fahren auftritt, dass er sich nicht in einer Situation ohne für das Fahren oder die Sicherheit nahezu unentbehrlicher Organe wiederfindet, die wegen der Panne nicht gesteuert werden können.

2. System nach Anspruch 1, **dadurch gekennzeichnet, dass** das Organ, das gemäß einer vorbestimmten Art funktionieren soll, aus der Gruppe ausgewählt wird, die umfasst: vordere Standlichter (32), hintere Standlichter (26), Abblendlichter (34), einen Scheibenwischer und davon wenigstens den vorderen Scheibenwischer (28), die Stromversorgung (100, 102, 104) für die Komponenten des Netzes.

3. System nach Anspruch 2, **dadurch gekennzeichnet,**
**dass** die vorbestimmte Art zumindest aus einer der Arten besteht umfassend: Einschalten der Standlichter (32, 26), Einschalten der Abblendlichter (34), Anstellen eines Scheibenwischers und davon zumindest des vorderen Scheibenwischers (28), Anstellen oder Angestelltlassen der Stromversorgung (100, 102, 104).

4. System nach Anspruch 1, 2 oder 3, **dadurch gekennzeichnet, dass** die vorbestimmte Art aus dem Angestelltlassen von mindestens einem Organ in einem Modus oder einer Position wie vor der Panne besteht.

5. System nach einem der vorstehenden Ansprüche, **dadurch gekennzeichnet,**
**dass** mit mindestens einer Komponente des Netzes ein Erkennungsmittel der Panne dieser Komponente (40, 67) und der Ausstrahlung von Steuersignalen gemäß der vorbestimmten Art oder der vorbestimmten Position im Fall des Erkennens einer Panne assoziiert ist.

6. System nach Anspruch 5, **dadurch gekennzeichnet,**
**dass** die Komponente ein charakteristisches Signal (44; 65) aussendet, wenn sie korrekt funktioniert und **dadurch**, dass das Erkennungsmittel einer Panne und der Ausstrahlung der Steuersignale (40, 67) derartige Steuersignale nur versendet bei Verschwinden dieses charakteristischen Signals (44, 65).

7. System nach einem der vorstehenden Ansprüche, **dadurch gekennzeichnet, dass** das Netz einen zentralen Blockrechner (20) umfasst, der die Steuersignale durch Multiplex an die zu steuernden Organe überträgt und einen Blockmultiplexer (30) zum Übertragen der Steuersignale zu einem Teil der zu steuernden Organe, z.B. die Organe, die ausschließlich über den Motorraum des Fahrzeugs zugänglich sind.

8. System nach den Ansprüchen 6 und 7, **dadurch gekennzeichnet, dass** mit dem zentralen Blockrechner (20) ein Erkennungsmittel (40) des Verschwindens des für das korrekte Funktionieren dieses zentralen Blockrechners charakteristischen Signals und mit einem Mittel zur Emission von Steuersignalen zu bestimmten Organen bei diesem Verschwinden assoziiert ist.

9. System nach Anspruch 8, **dadurch gekennzeichnet, dass** für den Fall eines korrekten Funktionierens der zentrale Blockrechner ein charakteristisches Signal zum Blockmultiplexer (30) sendet, wobei dieser Blockmultiplexer Mittel zum Entsenden von Steuersignalen dazu enthält, andere Organe in eine vorbestimmte Art oder in eine vorbestimmte Position zu bringen, wenn dieses charakteristische Signal nicht mehr von dem Blockmultiplexer empfangen wird.

10. System nach Anspruch 9, **dadurch gekennzeichnet, dass** der Blockmultiplexer (30) unter anderem ein Sicherheitsmittel (67) zum Erkennen einer Panne dieses Blocks und zum Entsenden von Steuersignalen auf eine vorbestimmte Art oder zu einer vorbestimmten Position zu den zu steuernden Organen über diesen Blockmultiplexer im Fall einer derartigen Erkennung einer Panne umfasst.

11. System nach einem der vorstehenden Ansprüche, **dadurch gekennzeichnet,**
**dass** die Mittel zum Funktionieren lassen oder zum Positionieren eines Organs gemäß einer vorbestimmten Art oder einer vorbestimmten Position nur aktiv sind, wenn der Motor des Fahrzeugs laufen kann.

12. System nach Anspruch 11, **dadurch gekennzeichnet,**
**dass** die Mittel zum Funktionieren lassen oder Positionieren von mindestens einem Organ gemäß einer vorbestimmten Art oder einer vorbestimmten Position nicht aktiv sind, wenn die Versorgung nach dem Kontakt (102) aktiviert ist.

13. System nach Anspruch 11 oder 12, **dadurch gekennzeichnet, dass** es ein Nachweismittel des Funktionszustandes des Motors enthält, z.B. ein Meßgerät des Öldrucks dieses Motors (70).

14. System nach Anspruch 10, **dadurch gekennzeichnet, dass** dieser zentrale Blockrechner (20) und der Blockmultiplexer (30) des Motorraums enthält:
ein Mittel, um den zentralen Blockrechner (20) in einen Modus des ökonomischen Funktionierens zu bringen, wenn der Motor angehalten ist,
ein Mittel zum Hemmen des Behelfsmittels des Blockmultiplexers (30) des Motorraums von dem zentralen Blockrechner (20), bevor der zentrale Blockrechner auf eine ökonomische Art funktioniert,
wobei der zentrale Blockrechner (20) das Behelfsmittel des Blockmultiplexers reaktiviert, wenn der Motor funktioniert.

15. System nach einem der vorstehenden Ansprüche, **dadurch gekennzeichnet,**
**dass** bestimmte Signalleiter des Netzes ein Paar bilden, in dem dieselben Informationen durch jeden der Leiter dieses Paares geleitet werden.

16. System nach einem der Ansprüche 7 bis 10, **dadurch gekennzeichnet, dass** dieser zentrale Blockrechner (20) seine Energie neben der permanenten Versorgung durch eine zusätzliche Versorgung (100) und durch eine Versorgung nach dem Kontakt (102) erhält.

17. System nach einem der Ansprüche 7 bis 10, **dadurch gekennzeichnet, dass** der Blockmultiplexer mit einer anderen elektrischen Energie versorgt wird als der Versorgung (104), die durch den zentralen Blockrechner (20), durch die Versorgung nach dem Kontakt (102) erzeugt wird.

## Claims

1. System for controlling driving elements of a vehicle, this system comprising a network which transmits control signals to these elements by multiplexing, these signals being generated by devices (10, 12, 14) which can be actuated by the driver, and including means for effecting operation or positioning of at least one driving element according to a predetermined safety mode or position in the event of a malfunction such that a corresponding control signal does not correctly reach this driving element to be controlled, **characterized in that** the system is such that the driver is assured, in the event of a malfunction of the multiplexed network occurring during driving, of not being deprived of elements which are quasi-indispensable for driving or safety and which cannot be controlled because of the malfunction.

2. System according to claim 1, **characterized in that** the element to be made to operate according to the predetermined mode is selected from the group comprising: the front parking lights (32), the rear parking lights (26), the low-beam headlights (34), a windscreen wiper, including at least the front windscreen wiper (28), power-supply sources (100, 102, 104) for network components.

3. System according to claim 2, **characterized in that** the predetermined mode consists of at least one of the modes comprising: illumination of the parking lights (32, 26), illumination of the low-beam headlights (34), activation of a windscreen wiper, including at least the front windscreen wiper (28), activation or maintenance of the power-supply sources (100, 102, 104) .

4. System according to claim 1, 2 or 3, **characterized in that** the predetermined mode consists of maintenance of at least one element in a mode or position existing prior to the malfunction.

5. System according to any one of the preceding claims, **characterized in that** there is associated with at least one component of the network a means for detecting a malfunction of this component (40, 67) and emitting control signals according to the predetermined mode or position in the event of a malfunction being detected.

6. System according to claim 5, **characterized in that** the component emits a characteristic signal (44; 65) when it operates correctly, and the means for detecting a malfunction and emitting control signals (40, 67) only emits such control signals upon the disappearance of this characteristic signal (44, 65).

7. System according to any one of the preceding claims, **characterized in that** the network comprises a central processor unit (20) which, by multiplexing, transmits the control signals to the elements to be controlled, and a multiplexer unit (30) for transmitting control signals to some of the elements to be controlled, for example those which are only accessible via the engine compartment of the vehicle.

8. System according to claims 6 and 7, **characterized in that** there is associated with the central processor unit (20) a means for detecting (40) the disappearance of the characteristic signal of the correct operation of this central processor unit and for emitting control signals to certain elements upon such disappearance.

9. System according to claim 8, **characterized in that**, in the case of correct operation, the central processor unit emits a characteristic signal to the multiplexer unit (30), this multiplexer unit comprising the means to emit control signals to place other elements in a predetermined mode or position if this characteristic signal is no longer received by the multiplexer unit.

10. System according to claim 9, **characterized in that** the multiplexer unit (30) furthermore comprises an emergency means (67) for detecting a malfunction of this unit and emitting, via this multiplexer unit in the event of such detection of a malfunction, control signals, for a predetermined mode or position, to the elements to be controlled.

11. System according to any one of the preceding claims, **characterized in that** the means for effecting operation or positioning of an element according to a predetermined mode or position are activated only if the engine of the vehicle is likely to turn.

12. System according to claim 11, **characterized in that** the means for effecting operation or positioning of at least one element according to a predetermined mode or position are only activated when the post-ignition power supply (102) has been activated.

13. System according to claim 11 or 12, **characterized in that** it comprises a means for detecting the operating state of the engine, for example a detector for detecting the oil pressure of this engine (70).

14. System according to claim 10, **characterized in that** the central processor unit (20) and the multiplexer unit (30) of the engine compartment comprise:
a means for, when the engine is stopped, setting the central processing unit (20) to an economical operating mode,
a means for inhibiting, from the central processor unit (20), the emergency means of the multiplexer unit (30) of the engine compartment before the central processor unit operates in economical mode,
the central processor unit (20) reactivating the emergency means of the multiplexer unit when the engine is in operation.

15. System according to any one of the preceding claims, **characterized in that** some of the signal conductors of the network form a pair in which the same information is transmitted by each of the conductors of this pair.

16. System according to any one of claims 7 to 10, **characterized in that**, in addition to receiving from the permanent power supply, the central processor unit (20) receives its energy, from the accessory power supply (100) and from the post-ignition power supply (102).

17. System according to any one of claims 7 to 10, **characterized in that**, in addition to being supplied by the power supply (104) generated by the central processor unit (20), the multiplexer unit is supplied with electric energy by the post-ignition power supply (102) .
